# EUROPEAN PATENT SPECIFICATION

(11) **EP 1 939 762 B1**
(45) Date of publication and mention of the grant of the patent: **28.05.2014**
(21) Application number: 07005799.7
(22) Date of filing: 21.03.2007
(51) Int. Cl.: G06F 17/30, H04L 29/08

(54) **Method for managing content for a mobile device and remote gateway for managing content**
Verfahren zur Inhaltsverwaltung für eine mobile Vorrichtung und entferntes Gateway zur Inhaltsverwaltung
Procédé de gestion du contenu d'un dispositif mobile et passerelle à distance pour gérer le contenu

(30) Priority: 29.12.2006 EP 06027109
(43) Date of publication of application: 02.07.2008
(73) Proprietor: Vodafone Holding GmbH, 40213 Düsseldorf (DE)
(72) Inventor: Martin, Maurice, 3620 Ianaken (BE); Lahaije, Paul, 5212 NH Maastricht (NL)
(74) Representative: Cullinane, Marietta Bettina

(56) References cited:
- EP-A- 1 227 637
- US-A1- 2006 031 528
- US-A1- 2006 242 273
- UEMUKAI T ET AL: "A remote display environment: an integration of mobile and ubiquitous computing environments" WIRELESS COMMUNICATIONS AND NETWORKING CONFERENCE, 2002. WCNC2002. 2002 IEEE, PISCATAWAY, NJ, USA,IEEE, vol. 2, 17 March 2002 (2002-03-17), pages 618-624, XP010585666 ISBN: 0-7803-7376-6

## Description

The present invention relates to a method for managing content for a mobile device and a remote gateway for managing the content for the mobile device.

Typical wireless network architectures are composed of a server computer, a network, and a mobile device, such as a computer, a phone, or a Personal Data Assistant (PDA), etc. On the mobile device a thin client may be installed. A thin client is referred to as a program on a client device which displays a user interface for a server-based application. Thin-clients run minimal or no user application code, i.e. most (if not all) of the application code runs on the server. Examples of thin-clients are Web Browsers, Citrix, X-Windows and PCAnywhere.

A network architecture of a wireless thin-client, server centric system is described in US 2003 / 0065715 A1, which proposes a Mobile Classic Blend ("MCB") wireless system. The MCB wireless system has a server component, client component, and application component for building thin-client wireless applications. The MCB wireless system allows server-centric programming such that developers do not have to write any client code, yet the developers can create a thin-client wireless application that keeps the look-and-feel of a standalone, native PDA application.

When users currently are using a thin client technology based browsing solution for browsing the Internet from a mobile device, all content which is downloaded will be stored at the remote server and will only be displayed on the mobile device. In the pending unpublished patent application EP 06 027 109.5 the inventors have suggested a solution, wherein content can be downloaded to the mobile device during a browsing session performed based on thin client technology. The content will thus be available on the mobile device for further usage. Also a solution where uploading content within a thin client application is possible is suggested by the inventors. These solutions are advantageous in that, even when using a thin client application, the user can obtain content on his mobile device, e.g. mobile phone, for further usage or can provide content to a remote web-site via the thin client application.

If the user, however, accidentally deletes content from his mobile phone, looses his mobile phone or if the mobile phone is damaged, content which was previously downloaded will be lost. Also content that was only available on the phone and was subsequently uploaded to a website will no longer be readily available to the user. In particular, if a considerable number of pieces of content have been uploaded or downloaded, it may be difficult to collect all the content again after loosing a phone.

For a conventional client/server structure such as the Internet US 2006/0031528 A1 suggests a method and system for downloading software products with reduced transmission time. In order to decrease the transmission time a proxy server is interposed between the client and the server. The proxy server is provided with a local cache. One disadvantage of this cache method is that it is not applicable to thin client technologies where the browser for accessing a server is installed and/or executed remotely from a mobile device to which content is to be downloaded.

Furthermore US 2006/0242273 A1 discloses a data backup and transfer system. The system operates to copy selected data between an account user's computer and a system computer. The computers may be mobile telephony. One disadvantage of this system is that a conventional web browser is mandatory on the account user's computer. Hence, this system is not applicable to thin client structures.

The problem to be solved by the present invention is thus to provide a solution for managing content for mobile devices such that it can easily be made available to the user of a thin client application.

The present invention is based on the finding that an automatic back-up of content is suitable for solving this problem.

According to a first aspect, the present invention relates to a method for managing content for a mobile device within a communication network comprising a network server, at least one remote gateway for a thin client application, with a browser application for browsing websites on the Internet installed and/or executed on the remote gateway (3), at least one management unit comprised by the remote gateway and at least one mobile device. The method is characterized in that the remote gateway upon identification of a request from a mobile device transmitted within a thin client application and relating to transmission of content to and/or from the mobile device establishes a copy of the respective content by triggering a back-up manager for managing copies of content.

The communication network according to the present invention is preferably a network of computer networks and will hereinafter also be referred to as the Internet. The communication network can be accessed from a mobile device via a mobile communications network, such as GSM or UMTS based networks. The mobile device may hence be a mobile phone or any other communication terminal for such networks. The mobile device is set up for mobile communication within the mobile communication network and can thus establish a communication with a remote gateway. The remote gateway is a network entity, such as a server and generally represents the entry point or node of the Internet interfacing with the mobile communications network.

On the remote gateway or on a server connected to the remote gateway according to the present invention at least one application is installed and/or executed. This application is a browser application for browsing websites of the Internet. This server-based application may be accessed via the mobile device. Such access is realized via a thin client application. The thin client application which will hereinafter also be referred to as the thin client, is preferably a program installed on the mobile device for remote access to a server-based application installed and/or executed on the remote gateway for display of the user interface of the server-based application on the mobile device. Within the thin client application requests may be transmitted from the mobile device to the remote gateway. Such a request may be a selection of options displayed on the mobile device via the remote gateway. The mobile device, via the thin client application installed thereon, serves as a mere input and output device for a server-based application executed on the remote gateway.

If a specific request relating to transmission of content is identified within the thin client application at the remote gateway, the remote gateway will initiate steps for managing the content. The identification of the request within the thin client application is preferably, the identification of a function or option selected within the server based application via the thin client application. This function or option may be the selection of a download or upload option displayed within a browser application, executed on the remote gateway. The request for downloading or uploading of content is thus initiated via the thin client application and executed on the remote gateway. In the remote gateway or connected to the remote gateway management units can be provided. The management unit or management units serve for managing content, which is used within the server-based application to be accessed via the thin client application. By identifying or extracting a request within the thin client application at the remote gateway, which is related to transmission of content, the loading of content to or from the mobile device can be tracked. According to the present invention the remote gateway initiates the establishment of a copy of the content, once a request relating to the transmission of this content is identified. Such a request may be the selection of a download or upload option displayed at the mobile device via the thin client application from the remote gateway. Content may include applications, such as games and/or data files such as audio or video data files, for example ring tones or pictures.

By establishing a copy of such content at the remote gateway, a back-up of the content transmitted to or from the mobile device can be realized. As this back-up is automatically established, when a request for transmission of content to or from the mobile device is determined, the inventive method provides for increased reliability of completeness of the back-up data. In addition, the method provides for improved user experience, as no separate command for backing-up of data has to be issued by the user.

According to one embodiment, the copy of the content is established by at least one of the management units. The management unit or units provided in or connected to the remote gateway serve for managing the transmission of content to and from the mobile device. The download or upload of content is being triggered by a request within the thin client application. A transmission of content within the thin client application without respective extensions to the architecture is not possible. Hence, management units for managing the transmission of content are provided. By using these units for establishing a copy of the transmitted content, the provision of a separate unit for copying the content is not necessary. In addition, the establishment of a copy at the management unit during the transmission of the content does not affect the transmission time and thereby provides the user with a better experience.

The management unit may be a download manager of the remote gateway for managing the download of content to the mobile device. This management unit may be triggered upon identification of a request for a download within the thin client application. This download extension of the thin client architecture for example allows for transmission of content to a mobile device to be performed, even though the browsing application is executed on the remote gateway. The download manager preferably communicates with a download client which is installed on the mobile device.

According to a further embodiment the management unit may be an upload manager for managing the upload of content from the mobile device. In this case, the transmission of content from the mobile device to the gateway and preferably to a network server of the communication network, e.g. the Internet, will be initiated upon identification of a request within the thin client application for uploading content. The upload manager communicates with an upload client installed on the mobile device.

According to another embodiment the management unit may be a control unit, in particular a back-up manager for managing copies of content. This management unit is preferably not in direct communication with the mobile device. The control unit rather communicates with other units of or connected to the remote gateway for receiving, providing, establishing and/or handling copies of content.

A copy may be received at the back-up manager from an upload manager or a download manager, when an upload request or a download request is identified within the thin client application. Alternatively or additionally, the back-up manager may provide copies to the download manager, for transmittal to the mobile device of the user. This transmission of copies will be described later in detail. The establishing or making of a copy of content at the back-up manager may be necessary, if the back-up manager is included in the transmission of content before a download manager for the download process or before the upload manager in an upload process. Finally, the handling of copies of content at the back-up manager may include sorting the copies, providing the copies to a database and/or retrieving copies of the content from the database. The back-up manager may also provide information on database entries to be displayed on a website.

In all of the above functions of the back-up manager, the back-up manager is directly or indirectly connected to a remote display gateway of the remote gateway, where commands of the thin client application are received and processed. Due to this link of the back-up manager to the remote display gateway, no separate command from the user for backing up data is necessary. The back-up will rather be triggered by a command issued via the thin client application and in particular by at least one of the management units, e.g. the upload manager or download manager, which is activated or triggered as a result of the requested transmission of content.

According to one embodiment of the inventive method, the copy of the content is transmitted to a database connected to the remote gateway. Connected in this context is to be understood as being accessible from at least one management unit of the remote gateway. The database could thus be located on the remote gateway, i.e. be included in the remote gateway. The transmission to the database is preferably performed via the back-up manager. The advantage of transmitting the content to a database connected to the remote gateway or even to a database within the gateway is that the content will be accessible to the user communicating with the remote gateway at a later stage via the thin client application on the mobile device.

Preferably, the copies of the content are stored in the database grouped, e.g. sorted by user or linked a user. This sorting of the copies of the content will allow individual users to access all of their personal content which has been transmitted to and/or from the mobile device at a later stage. Multiple users may have the same content, i.e. copies of content, stored in the database. The copies of the content are therefore preferably linked to a specific user. Thereby only one copy of content may serve for several users.

The copy of the content can preferably be accessed by the user of the mobile device via the thin client application on the mobile device. Accessing the copies of content in this context is to be understood as viewing the copy of the content, downloading the copy of the content and/or editing the copy of the content, in particular deleting the copy of the content. For example, deleting of copies of content from the database may for example be suitable if the user of the mobile device deletes content from the mobile device. In this case, a trigger may be initialized on the mobile device. The trigger may be a flag or a label assigned to the content. The trigger may be transmitted to the remote gateway during an existing communication connection used for the thin client application. Alternatively, upon a subsequent re-connection to the remote gateway the trigger, e.g. flag or label may be transmitted to the remote gateway. The back-up manager will then execute a respective deletion of the copy in the database. The user may define the settings for the handling of such a trigger. For example, deletion of the copy of content may be postponed for a given time, e.g. one month, after the actual deletion of the content at the mobile device.

The access of the user to copies of content stored in the database may for example be realized by providing a website with the back-up data. This website can be viewed and accessed by the user of the mobile device via the thin client application wherein the browser application will be executed on the remote gateway. The download of back-up data will be possible via a management unit of the remote gateway, in particular the download manager. Preferably, the request for downloading from the back-up website will be identified by the remote gateway and an establishment of a copy of the content will be avoided for the download of copies of content.

Preferably, the delivery of content from the gateway to the mobile device and from the mobile device to the remote gateway is performed via the communication connection of the mobile device to the remote gateway which is used for the thin client application. This communication connection may be a communication connection via the internet protocol (IP). This physical connection has originally been set up by the user when accessing the remote gateway. If the connection between the mobile device and the remote gateway has dropped or been interrupted, the download manager may use WAP push capabilities within the mobile communication network to deliver the copy of the content to the user. The WAP push may be performed by using the session initiation application (SIA).

According to a further aspect, the present invention relates to a remote gateway for managing content for at least one mobile device of a communication network, wherein the remote gateway comprises a remote display gateway for providing display data for displaying at least a user interface on a mobile device within a thin client application. The remote gateway is characterized in that a browser application is installed and/or executed on the remote gateway, in that the browser application is accessed via the thin client application, in that the thin remote gateway comprises at least one management unit for establishing a copy of content transmitted to or from the the mobile device and in that at least one management unit is connected to a database for storing at least one copy of content delivered to and/or from the mobile device. One of the management units is preferably a control unit, in particular back-up manager, for establishing a copy of content received from or delivered to the mobile device and/or for handling entries of the database.

In case of download of content, the establishing of a copy of content may be performed by the back-up manager upon receipt of the content from a download manager. Alternatively, the remote gateway, in particular the remote display gateway, when triggering the download manager to download the content may transmit the content to the back-up manager first. After the copy of the content has been established, the back-up manager may then transmit the content to the download manager for downloading. As the download manager, when first triggered by the remote gateway, will preferably initiate negotiations with the mobile device for memory and other capabilities of the mobile device, the back-up manager can establish the copy in the meantime. Alternatively, the back-up manager may receive a copy of content from a download manager.

When content is uploaded from the mobile device to an upload manager, the upload manager may direct the content to the back-up manager for further transmission to the remote gateway and, ultimately, to a network server. A copy of the uploaded content is made at the upload manager or at the back-up manager.

The handling or controlling of entries of the database by the back-up manager may comprise the addition, modification and/or deletion of database entries.

According to one embodiment the control unit, i.e. the back-up manager, is connected to a download manager and/or to the remote display gateway via a bidirectional connection. The bidirectional communication connection between the download manager and the back-up manager is preferable to allow the user to obtain the copies of content at his mobile device. When downloading content from a website the download manager will provide the control unit with the content and/or a copy of the content. If the user at a later stage wants to download copies from the back-up database, the back-up manager will provide the download manager with the respective copies. The bidirectional connection between the back-up manager and the remote display gateway is beneficial, in that commands or settings may be transmitted from the remote display gateway to the back-up manager and back-up data entries may be made available to the remote display gateway, so that the user may view and access the database entries via the thin client application from his mobile device.

The units of the remote display, in particular the management units, i.e. the upload manager, the download manager and / or the back-up manager, may be implemented as software or hardware components at the remote gateway.

The remote gateway is preferably designed for the inventive method.

Features and advantages which are described with respect the inventive method also apply the inventive gateway and vice versa.

The present invention will now be described again in detail with reference to the enclosed figures.
Figure 1 shows a system in which the inventive method can be used;
Figure 2 shows a flowchart of one embodiment of the inventive method; and
Figure 3 shows a flowchart of another embodiment of the inventive method.

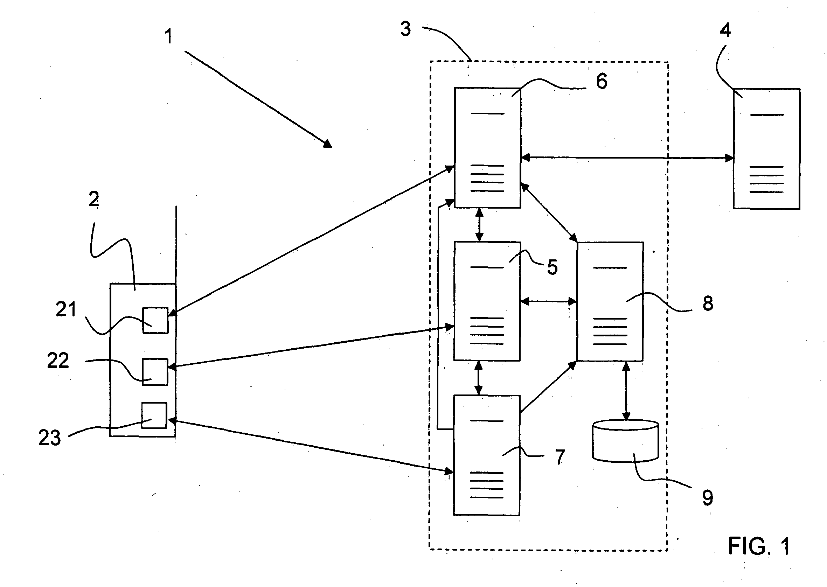

The system shown in Figure 1 comprises a mobile device, depicted as a mobile phone 2. On the mobile phone 2 a remote display client 21 is provided. This client 21 may be software installed on the mobile phone 2. The thin client application allows remote access and display of a server-based application, such as a browser, installed and / or executed on a remote gateway 3.

The remote gateway 3 comprises a remote display gateway 6 as well as three management units 5, 7 and 8. The remote display gateway 6 is connected to or can access at least one network server 4. The network server might host a website or a portal. With a browser application installed and executed on the remote display gateway 6 the user of the mobile device 2 can view the respective websites via the remote display client 21.

The management unit 5 is a download manager for downloading content from the remote display gateway 6 or a network server 4 via the remote display gateway 6 to the mobile phone 2 which interacts with the remote display gateway 6 via a thin client application. For this purpose a download client 22 is installed on the mobile phone 2. The download client 22 may be software on the mobile device 2.

Management unit 7 is an upload manager for uploading content from the mobile phone 2 to the remote gateway 3 which interacts with the mobile phone 2 via a thin client application. For this purpose an upload client 23 is installed on the mobile phone 2. The upload client 23 may be software on the mobile device 2.

Management unit 8 is a control unit, in particular a back-up manager. This management unit 8 does not directly communicate with the mobile phone 2 or clients 21, 22, 23 installed thereon. The back-up manager 8 is, however, connected to a database 9 for storing copies of content. The database 9 is shown as being part of the remote gateway 3, i.e. being included therein. It is, however, also possible that the database 9 is a separate unit and is connected to the remote gateway 3 for exchange of information or data.

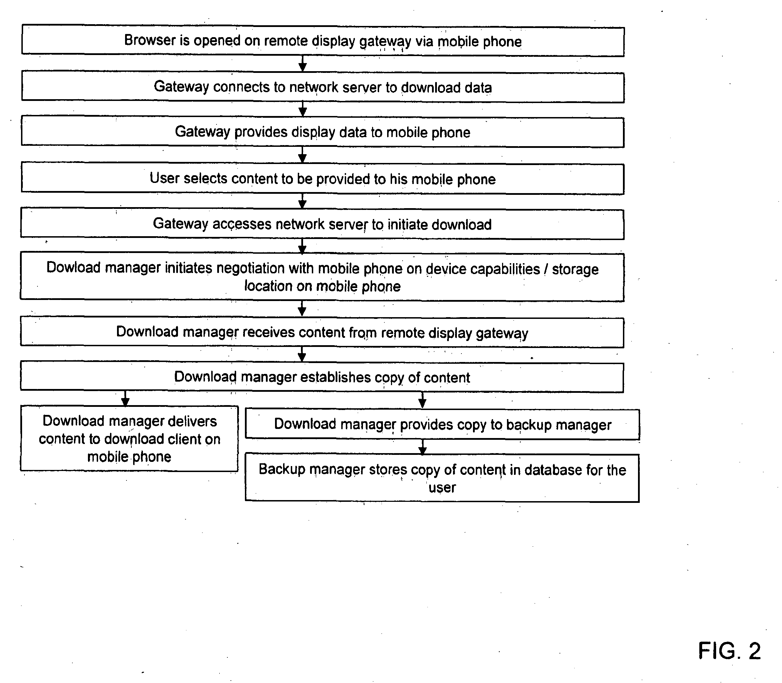

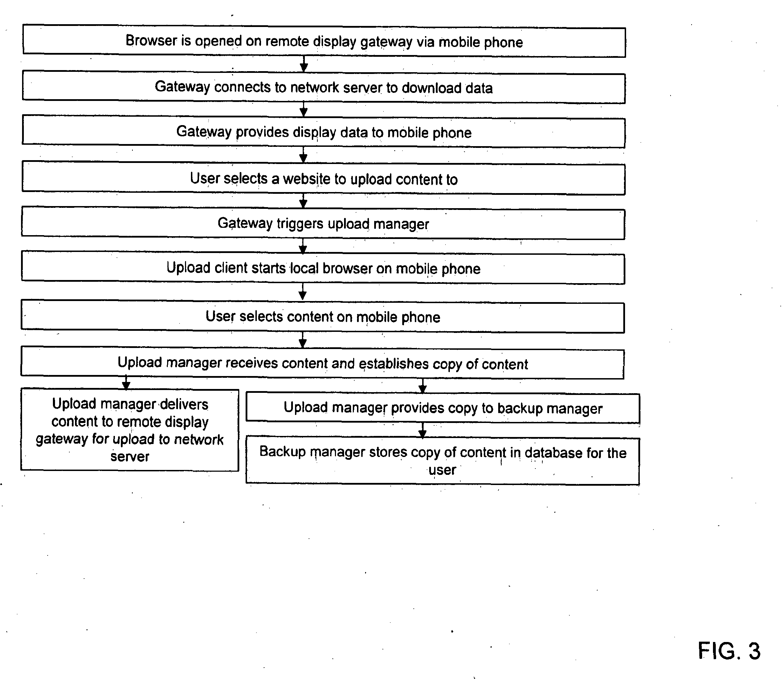

The function of the individual management units 5, 7 and 8 will now be further explained with reference to Figures 2 and 3.

A user may initiate a thin client application and for example access a browser application executed on the remote gateway 3. Thereby the browser will be opened on a remote display gateway 6 from the mobile phone 2. If the user selects a link, for example to a specific website, the remote display gateway 6 will connect to the respective network server 4, from which data should be retrieved and displayed to the user. The network server 4 may be a portal allowing access to various databases and other resources. The data from the network server 4 will be displayed to the user via the remote display gateway 6, which forwards the necessary display data to the remote display client 21 on the mobile phone.

If the user selects a piece of content to be delivered to his mobile phone 2, e.g. clicks on a link to download a game or a ring tone, a respective signal will be received at the remote display gateway 6. This specific request may be identified at the remote display gateway 6 by monitoring the actions related to the requests from the user. This means, the remote display gateway 6 will not only recognize the selection of a specific option within the server based application, e.g. browser application, by the user, but will also identify, that this selection is related to transmission of content to the mobile phone 2. Upon receipt of the download order to download content to the mobile phone 2 from the user, the remote display gateway 6 accesses the network server 4 to initiate the download of content from the network server 4 to the remote gateway 3.

Simultaneously or subsequently, the remote display gateway 6 will trigger the download manager 5 to initiate the download of content to the mobile device 2. This initiation of download to the mobile device 2, in particular to the download client 22, may comprise negotiations on device capabilities of the mobile phone 2. The device capabilities may be determined to assure that the content to be downloaded or transferred to the mobile device 2 is supported by the mobile device 2. Once the negotiation with the mobile phone 2 on device capabilities is finalized, the download manager 5 will receive the content to be downloaded from the remote display gateway 6. Before transmitting the content to the download client 22, the download manager 5 will establish a copy of the content. This copy of the content will be provided to the back-up manager 8. Alternatively, the download manager 5 may trigger the back-up manager 8 to create a back-up copy. The copy of content will be transmitted to the database 9 for storage. The back-up manager 8 will store the copy of the content in the database 9 in association with user information relating to the user of the mobile phone 2, preferably linked to the user. Subsequently or simultaneously, the download manager 5 will provide the content to the mobile phone 2, in particular to the download client 22.

By making a copy of the content which is downloaded to the mobile phone 2 and storing the copy in a database 9 at the remote gateway 3, an automated back-up mechanism is realized.

If a user wants to upload content for example to a website, the uploading of the content will be managed by the upload manager 7. In this case, the user after initiating a browser session via the thin client application to the remote display gateway 6 may select a homepage or webpage to which content should be uploaded. Such content may for example be personal data, such as pictures, contact information and/or audio files. Once the remote display gateway 6 receives a request for upload of content, the upload manager 7 will be triggered. The upload manager 7 provides the upload client 23 with the information that content is to be uploaded from the mobile phone 2. The upload client 23 may start an application on the mobile device 2, such as a local browser. The user can then select the content to be uploaded. Once the user selected the content, the upload client 23 will transmit the content to the upload manager 7. Upon receipt of the content the upload manager 7 will establish a copy of the content and will provide the copy to the back-up manager 8. Alternatively, the upload manager 7 may trigger the back-up manager 8 to create a back-up copy. The back-up manager 8 stores the copy of the content in the database 9 connected thereto. Also in this case the back-up manager 8 will serve as an automated back-up mechanism for content transmitted from the mobile phone 2.

The behaviour of the back-up manager 8 and/or the upload manager 7 and download manager 5 can be configured by the user. In particular, the user can select whether an automatic synchronisation of content between the mobile phone 2 and the back-up manager 8, respectively the database 9, should be performed. Alternatively, the user may configure the back-up manager 8 to only perform a back-up upon request.

Also the handling of data stored in the database 9 can be configured by the user via the back-up manager 8. For example, settings may be used where content deleted from the mobile phone 2 will be kept in the database 9 for a given period of time. The behaviour or settings of the management units 5, 7, 8 can be entered by the user via the thin client application. In this case, for example a website for determining settings may be provided and can be accessed by the browser installed on the remote display gateway 6. Alternatively, an interface for access to the management units from a PC via the Internet may be provided.

The copies of content stored in the database 9 will be available to the user of the mobile phone 2. Thereby the user can retrieve lost content files. The access to the content files in database 9 will be provided via the remote display gateway 6. The content of each user may be displayed to the respective user via a website. This website can be viewed by the user of the mobile phone 2 via the thin client application. If the user selects one or more content files to be downloaded from the back-up website to the mobile device 2, the back-up manager 8 will provide the respective content to the download manager 5. As download manager 5 will receive the content from the back-up manager 8 instead of from the remote display gateway 6, no copy of the received content will be established at the download manager 5 in this case. The content retrieved from the database 9 can then be downloaded to the download client 22 on the mobile phone 2.

If a user decides to delete content from his mobile phone 2, a trigger may be sent from the mobile phone 2 to the remote gateway 3. The trigger will initiate the deletion of the back-up version of the content from the database 9. Preferably, the content will only be deleted after a preset time period, e.g. one month after deletion from the mobile device 2. Thereby an additional security can be provided by the back-up system. Transmission of the trigger to the remote gateway will be performed according to the settings defined or chosen by the user. For example, the setting may be for the mobile phone 2 to connect to the remote gateway 3, when a trigger is set. Alternatively, the trigger may be transmitted once a connection with the remote gateway 3 is detected.

If a user wants to restore all of his personal data on his mobile phone 2, for example a new mobile phone 2, he may browse via the thin client application and browser application installed on the remote display gateway 6 to the back-up website which is offered by the back-up manager 8. The user can then select how he wants the restore to take place. For example all data may be selected. Alternatively, the user can specify the specific data he wants to restore on his mobile device. Such specific data may for example be only contacts. The back-up manager retrieves all or only the selected data from the back-up database and triggers the delivery of the data to the mobile phone 2. The delivery is performed via the download manager 5 which will ultimately transmit the data to the mobile phone 2.

With the present invention an automatic back-up facility for content is enabled by a back-up manager. The back-up manager is preferably a software unit, in particular an application stored and executed on the remote gateway. The back-up manager interfaces with a download manager and an upload manager. Thereby the invention provides an easy-to-use back-up facility which is automated. This facility allows users to retrieve content that has been accidentally deleted from their mobile device or to recover content whenever a mobile device gets stolen or broken.

## Claims

1. Method for managing content for a mobile device within a communication network comprising a network server (4), at least one remote gateway (3) for a thin client application, with a browser application for browsing websites on the Internet installed and/or executed on the remote gateway (3), at least one management unit (5, 7, 8) comprised by the remote gateway (3) and at least one mobile device (2), **characterized in that** the remote gateway (3) upon identification of a request from a mobile device (2) transmitted within a thin client application and relating to transmission of content to and/or from the mobile device (2) establishes a copy of the respective content by triggering a back-up manager (8) for managing copies of content.

2. Method according to claim 1, **characterized in that** the copy of the content is established by at least one of the management units (5, 7, 8).

3. Method according to claim 1 or 2, **characterized in that** the management unit (5, 7, 8) is a download manager (5) of the remote gateway (3) for managing the download of content to the mobile device (2), an upload manager (7) for managing the upload of content from the mobile device (8) or a control unit, in particular a back-up manager (8) for managing copies of content.

4. Method according to any one of claims 1 to 3, **characterized in that** the copy of the content is transmitted to a database (9) connected to the remote gateway (3).

5. Method according to claim 4, **characterized in that** the copies of content are being stored grouped by users, preferably linked to a user, of mobile devices (2).

6. Method according to any one of claims 1 to 5, **characterized in that** the copy of the content can be accessed by the user of the mobile device (2) via the thin client application on the mobile device (2).

7. Method according to any one of claims 1 to 6, **characterized in that** the copy of the content is delivered to the mobile device (2) of the user via at least one management unit (5, 7, 8), in particular a download manager (5), of the gateway (3).

8. Method according to any one of claims 1 or 7, **characterized in that** the delivery of the content from the remote gateway (3) to the mobile device (2) is performed via the communication connection of the mobile device (2) to the remote gateway (3) which is used for the thin client application.

9. Remote gateway for managing content for at least one mobile device (2) of a communication network, wherein the remote gateway (3) comprises a remote display gateway (6) for providing display data for displaying at least a user interface on a mobile device (2) within a thin client application, **characterized in that** a browser application is installed and/or executed on the remote gateway (3), **in that** the browser application is accessed via the thin client application, **in that** the remote gateway (3) comprises at least one management unit (5, 7, 8) for establishing a copy of content by triggering a back-up manager (8) for managing copies of content transmitted to or from the mobile device (2) and **in that** at least one management unit (8) is connected to a database (9) for storing at least one copy of content delivered to and/or from the mobile device (2).

10. Remote gateway according to claim 9, **characterized in that** one management unit is a control unit, in particular a back-up manager (8), for establishing a copy of content received from and/or delivered to the mobile device (2), and / or for handling entries of the database.

11. Remote gateway according to claim 9 or 10, **characterized in that** the control unit (8) is connected to a download manager (5) and / or to the remote display gateway (6) via a bidirectional connection.

## Patentansprüche

1. Verfahren zum Verwalten von Inhalt für ein mobiles Gerät in einem Kommunikationsnetzwerk, das einen Netzwerkserver (4), zumindest ein Fern-Gateway (3) für eine Thin Client Anwendung, mit einer Browseranwendung zum Browsen von Webseiten im Internet, die auf dem Fern-Gateway (3) installiert ist und/oder ausgeführt wird, zumindest eine Verwaltungseinheit (5, 7, 8), die von dem Fern-Gateway (3) umfasst ist, und zumindest ein mobiles Gerät (2), **dadurch gekennzeichnet, dass** das Fern-Gateway (3) bei Identifizierung einer Anfrage von dem mobilen Gerät (2), die in einer Thin Client Anwendung übermittelt wurde und sich auf die Übermittlung von Inhalt zu und/oder von dem mobilen Gerät (2) bezieht, eine Kopie des betreffenden Inhaltes erstellt durch Triggern eines Back-Up-Manager (8) zum Verwalten von Kopien von Inhalt.

2. Verfahren nach Anspruch 1, **dadurch gekennzeichnet, dass** die Kopie des Inhaltes durch zumindest eine der Verwaltungseinheiten (5, 7, 8) erstellt wird.

3. Verfahren nach einem der Ansprüche 1 oder 2, **dadurch gekennzeichnet, dass** die Verwaltungseinheit (5, 7, 8) ein Download-Manager (5) des Fern-Gateways (3) zur Verwaltung des Downloads von Inhalten auf das mobile Gerät (2), ein Upload-Manager (7) zum Verwalten des Hochladens von Inhalten von dem mobilen Gerät (2) oder eine Steuereinheit, insbesondere ein Back-up-Manager (8) zur Verwaltung von Kopien von Inhalt ist.

4. Verfahren nach einem der Ansprüche 1 bis 3, **dadurch gekennzeichnet, dass** die Kopie des Inhaltes an eine Datenbank (9) übertragen wird, die mit dem Fern-Gateway (3) verbunden ist.

5. Verfahren nach Anspruch 4, **dadurch gekennzeichnet, dass** die Kopien von Inhalt nach Nutzern gruppiert gespeichert werden, vorzugsweise verbunden mit einem Nutzer des mobilen Gerätes (2).

6. Verfahren nach einem der Ansprüche 1 bis 5, **dadurch gekennzeichnet, dass** die Kopie des Inhaltes durch den Nutzer des mobilen Gerätes (2) über die Thin Client Anwendung auf dem mobilen Gerät (2) zugänglich ist.

7. Verfahren nach einem der Ansprüche 1 bis 6, **dadurch gekennzeichnet, dass** die Kopie des Inhaltes an das mobile Gerät (2) des Nutzers über zumindest eine Verwaltungseinheit (5, 7, 8), insbesondere einen Download-Manager (5), des Fern-Gateways (3) übermittelt wird.

8. Verfahren nach einem der Ansprüche 1 bis 7, **dadurch gekennzeichnet, dass** die Übermittlung des Inhaltes von dem Fern-Gateway (3) an das mobile Gerät (2) über die Kommunikationsverbindung des mobilen Gerätes (2) zu dem Fern-Gateway (3) durchgeführt wird, die für die Thin Client Anwendung verwendet wird.

9. Fern-Gateway zur Verwaltung von Inhalt für zumindest ein mobiles Gerät (2) eines Kommunikationsnetzwerkes, wobei das Fern-Gateway (3) ein Fern-Anzeige-Gateway (6) zum Liefern von Anzeigedaten zur Anzeige zumindest einer Nutzerschnittstelle auf einem mobilen Gerät (2) in einer Thin Client Anwendung umfasst, **dadurch gekennzeichnet, dass** eine Browser Anwendung auf dem Fern-Gateway (3) installiert ist und/oder ausgeführt wird, dass auf die Browser Anwendung über die Thin Client Anwendung zugegriffen wird, dass das Fern-Gateway (3) zumindest eine Verwaltungseinheit (5, 7, 8) zum Erstellen einer Kopie von Inhalt durch Triggern eines Back-Up-Managers (8) zur Verwaltung von Kopien von Inhalten, die zu oder von dem mobilen Gerät (2) übermittelt werden, umfasst und dass zumindest eine Verwaltungseinheit (8) mit einer Datenbank (9) zum Speichern von zumindest einer Kopie von Inhalten, die zu und/oder von dem mobilen Gerät (2) übermittelt wurden, verbunden ist.

10. Fern-Gateway nach Anspruch 9, **dadurch gekennzeichnet, dass** eine Verwaltungseinheit eine Steuereinheit, insbesondere ein Back-Up-Manager (8) zum Erstellen einer Kopie von Inhalt, der von dem mobilen Gerät (2) empfangen und/oder an das mobile Gerät (2) geliefert wurden, und/oder zur Verwaltung von Einträgen der Datenbank.

11. Fern-Gateway nach einem der Ansprüche 9 oder 10, **dadurch gekennzeichnet, dass** die Steuereinheit (8) mit einem Download-Manager (5) und/oder dem Fern-Anzeige-Gateway (6) über eine bidirektionale Verbindung verbunden ist.

## Revendications

1. Procédé de gestion du contenu d'un dispositif mobile dans un réseau de communication, comprenant un serveur de réseau (4), au moins une passerelle distante (3) pour une application de client léger, une application de consultation permettant de consulter des sites Web sur Internet étant installée et/ou exécutée sur la passerelle distante (3), au moins une unité de gestion (5, 7, 8) agencée sur la passerelle distante (3) et au moins un dispositif mobile (2), **caractérisé en ce que** la passerelle distante (3), lors de l'identification d'une demande issue d'un dispositif mobile (2), transmise à l'intérieur d'une application de client léger et se rapportant à la transmission de contenu vers le dispositif mobile (2) et/ou à partir de ce dernier établit une copie du contenu respectif en démarrant un gestionnaire de sauvegarde (8) destiné à gérer des copies du contenu.

2. Procédé selon la revendication 1, **caractérisé en ce que** la copie du contenu est établie par au moins l'une des unités de gestion (5, 7, 8).

3. Procédé selon la revendication 1 ou 2, **caractérisé en ce que** l'unité de gestion (5, 7, 8) est un gestionnaire de téléchargement descendant (5) de la passerelle distante (3) destiné à gérer le téléchargement descendant de contenu vers le dispositif mobile (2), un gestionnaire de téléchargement ascendant (7) destiné à gérer le téléchargement ascendant de contenu à partir du dispositif mobile (8) ou une unité de commande, en particulier, un gestionnaire de sauvegarde (8) destiné à gérer des copies de contenu.

4. Procédé selon l'une quelconque des revendications 1 à 3, **caractérisé en ce que** la copie du contenu est transmise à une base de données (9) reliée à la passerelle distante (3).

5. Procédé selon la revendication 4, **caractérisé en ce que** les copies de contenu sont stockées regroupées par utilisateur, de préférence liées à un utilisateur, de dispositifs mobiles (2).

6. Procédé selon l'une quelconque des revendications 1 à 5, **caractérisé en ce que** la copie du contenu peut être consultée par l'utilisateur du dispositif mobile (2) au moyen de l'application de client léger sur le dispositif mobile (2).

7. Procédé selon l'une quelconque des revendications 1 à 6, **caractérisé en ce que** la copie du contenu est délivrée au dispositif mobile (2) de l'utilisateur au moyen d'au moins une unité de gestion (5, 7, 8), en particulier, un gestionnaire de téléchargement descendant (5), de la passerelle (3).

8. Procédé selon l'une quelconque des revendications 1 ou 7, **caractérisé en ce que** l'acheminement du contenu de la passerelle distante (3) vers le dispositif mobile (2) est assuré au moyen d'une liaison de communication du dispositif mobile (2) à la passerelle distante (3) qui est utilisée pour l'application de client léger.

9. Passerelle distante destinée à gérer le contenu d'au moins un dispositif mobile (2) d'un réseau de communication, dans laquelle la passerelle distante (3) comprend une passerelle d'affichage distante (6) destinée à fournir des données d'affichage afin de montrer au moins une interface d'utilisateur sur un dispositif mobile (2) à l'intérieur d'une application de client léger, **caractérisée en ce qu'**une application de consultation est installée et/ou exécutée sur la passerelle distante (3), **en ce que** l'application de consultation est consultée par l'intermédiaire de l'application de client léger, **en ce que** la passerelle distante (3) comprend au moins une unité de gestion (5, 7, 8) destinée à établir une copie de contenu en démarrant un gestionnaire de sauvegarde (8) destiné à gérer des copies du contenu transmises au dispositif mobile (2) ou à partir de ce dernier et **en ce qu'**au moins une unité de gestion (8) est reliée à une base de données (9) afin de stocker au moins une copie de contenu délivrée au dispositif mobile (2) et/ou provenant de ce dernier.

10. Passerelle distante selon la revendication 9, **caractérisée en ce qu'**une unité d'une gestion est une unité de commande, en particulier, un gestionnaire de sauvegarde (8), destiné à établir une copie de contenu reçue à partir du dispositif mobile (2) et/ou délivrée par ce dernier, et/ou à gérer des entrées de la base de données.

11. Passerelle distante selon la revendication 9 ou 10, **caractérisée en ce que** l'unité de commande (8) est raccordée à un gestionnaire de téléchargement descendant (5) et/ou à la passerelle d'affichage distante (6) par l'intermédiaire d'une liaison bidirectionnelle.
